(19) Europäisches Patentamt / European Patent Office / Office européen des brevets

(11) **EP 4 787 248 A1**

(12) **EUROPEAN PATENT APPLICATION**

(43) Date of publication:
**05.08.2026 Bulletin 2026/32**

(21) Application number: **25155189.1**

(22) Date of filing: **31.01.2025**

(51) International Patent Classification (IPC):
**G06N 10/60** $^{(2022.01)}$ **G06N 10/80** $^{(2022.01)}$
**G06N 5/01** $^{(2023.01)}$

(52) Cooperative Patent Classification (CPC):
**G06N 10/60; G06N 5/01; G06N 10/80**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Terra Quantum AG**
**9000 St. Gallen (CH)**

(72) Inventors:
• **Podobrii, Mikhail**
**9000 St. Gallen (CH)**

• **Kuzmin, Viacheslav**
**9000 St. Gallen (CH)**
• **Voloshinov, Vladimir**
**9000 St. Gallen (CH)**
• **Veshchezerova, Margarita**
**9000 St. Gallen (CH)**
• **Perelshtein, Michael**
**9000 St. Gallen (CH)**

(74) Representative: **Lucke, Andreas**
**Boehmert & Boehmert**
**Anwaltspartnerschaft mbB**
**Pettenkoferstrasse 22**
**80336 München (DE)**

(54) **TECHNIQUES FOR CONVERTING AN OPTIMIZATION FUNCTIONAL FOR A BINARY OPTIMIZATION PROBLEM INTO A COST FUNCTION FOR A QUANTUM COMPUTATION**

(57) The disclosure relates to method of converting an optimization functional for a binary optimization problem into a cost function for a quantum computation. The method comprises representing a first optimization variable among a plurality of binary optimization variables of the optimization functional as a first product of binary transformed variables, wherein the first product comprises a first plurality of factors, wherein each factor among the first plurality of factors corresponds to a subset of the plurality of optimization variables that includes the first optimization variable. The method further comprises converting each of the binary optimization variables or the binary transformed variables into a continuous variable; converting the optimization functional into the cost function, wherein the cost function comprises the transformed and continuous variables; and selecting a plurality of the subsets for the quantum computation.

Fig. 5

**Description**

Technical Field

The disclosure relates to techniques for quantum computation by means of a quantum computational network, in particular to techniques for converting an optimization functional for a binary optimization problem into a cost function for a quantum computation.

Background

Quantum computers provide a platform of controllable quantum mechanical systems whose state and interaction can be controlled in order to perform a computation. The computation is realized by an evolution of the controllable quantum mechanical systems, and the state of the quantum mechanical systems can be measured to determine the outcome of the computation.

A quantum computer generally encodes information into so-called "qubits", representing a quantum-mechanical two-level system and acting as a quantum mechanical equivalent of classical bits. Qubits are physical systems whose quantum mechanical state can be (coherently) controlled and (substantially) preserved between two basis states during the time of a computation, in the following referred to in ket notation as |0> and |1>. As an example, a qubit may be implemented by encoding information in the spin state of an electron, e.g., in the electron being in an "up" state or a "down" state, but may also be encoded in a polarization state of a photon, in states of a (superconducting) oscillator, in energy levels of an atom, or the like.

Control operations on these qubits are usually termed "quantum gates". Quantum gates can coherently act on qubits for inducing changes of the state of a single qubit (so-called single-qubit gates) and for acting on multiple qubits (so-called multi-qubit gates), e.g., to entangle the states of the multiple qubits, and any combination thereof. For example, a single-qubit gate may induce a rotation of the spin state of an electron by a selectable value, e.g., $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured (usually, repeatedly) in a measurement unit after applying a sequence of quantum gates to determine the probabilities for each possible outcome of the computation.

A quantum computer can leverage the special properties of quantum mechanical states, in particular the superposition and entanglement of different quantum states, to find solutions with a comparatively low number of calculation steps. These properties may permit a quantum computer to compute solutions to problems which are considered intractable on classical computers.

Combinatorial optimizations are ubiquitous in many fields of industry and technology, and many of these optimization problems can be formulated as a Quadratic Unconstrained Binary Optimization (QUBO) problem or, more generally, as a Polynomial Unconstrained Binary Optimization (PUBO) problem. These are NP hard problems, and quantum computers have been shown to have a potential to outperform classical computers in tackling these problems. Classical-quantum hybrid computers, in particular variational quantum computational networks have been employed for this task, cf. US 2022/0101167 A1 and M. Sciorilli et al., "Towards large-scale quantum optimization solvers with few qubits", arXiv:2401.09421 v2, 25 March 2024.

However, current quantum computers have a limited number of logical qubits, and hence a major challenge is the number of qubits required for quantum solvers to allow them to outperform, or even become competitive with classical computers, cf. M. Sciorilli *et al.* and the references cited therein for an overview of the state-of-the-art.

B. Tan et al., "Qubit-efficient encoding schemes for binary optimisation problems", Quantum 5 (2021) p. 454 and M. R. Perelshtein et al., "NISQ-compatible approximate quantum algorithm for unconstrained and constrained discrete optimization", Quantum 7 (2023) p. 1186 have suggested a reduced encoding (so-called "minimal encoding") to limit the number of qubits. However, minimal encoding comes at the expense of the quality of the solutions, which may be limited due to local minima of the optimization functional.

In view of the prior art, what is needed is an improved encoding for binary optimization problems that allows these problems to be efficiently tackled on a quantum computer, and in particular requires only a reduced number of qubits while still achieving a high accuracy of the optimization results.

Overview

This objective is achieved with a method according to independent claim 1. The dependent claims relate to preferred embodiments.

According to a first aspect, the disclosure relates to a method of converting an optimization functional for a binary optimization problem into a cost function for a quantum computation, the method comprising: representing a first optimization variable among a plurality of binary optimization variables of the optimization functional as a first product of binary transformed variables, wherein the first product comprises a first plurality of factors, wherein each factor among the first plurality of factors corresponds to a subset of the plurality of optimization variables that includes the first optimization variable; converting each of the binary optimization variables or the binary transformed variables into a continuous variable; converting the optimization functional into the cost function, wherein the cost function comprises a transformed and continuous variables; and selecting a plurality of the subsets for the quantum computation.

The optimization functional is sometimes also referred to as an objective functional or an objective function. The cost function for the quantum computation likewise corresponds to an optimization functional for the quantum computation, and is sometimes also called an energy function or an energy functional, even though it may not necessarily represent the true physical energy of the physical system.

Optimization of the converted functional may be considered an analog of a local search, i.e., an algorithm that starts from a candidate solution and iteratively searches for a better solution among a predefined set, in particular a neighborhood set. The converted optimization functional is particularly suitable for the implementation on a quantum computer, allowing to handle a classically intractable neighborhood size. By a suitable choice of subsets, the cost function may be optimized efficiently and with limited qubit resources on a quantum computer, without significantly sacrificing the accuracy of the optimization results, as will be demonstrated in more detail below. In particular, the techniques of the present disclosure are feasible to build an analogue of local search with a number of neighbors that is significantly larger than in the minimal encoding techniques of the prior art, and hence overcome the limitations of the minimal encoding.

The conversion of the optimization functional may seem counterintuitive and disadvantageous at first sight, since it introduces additional complexities into the optimization functional that would appear to make the optimization more cumbersome. However, it turns out that the converted optimization functional is much better adapted to the implementation on a quantum computer, in particular on a variational quantum computational network, and this may overcompensate the additional complexities. As a consequence, the techniques of the present disclosure may permit to solve binary optimization problems on a quantum computer with limited qubit resources fast and accurately.

According to an embodiment, the binary optimization is a quadratic unconstrained binary optimization (QUBO) or a polynomial unconstrained binary optimization (PUBO).

Many combinatorial binary optimization problems can be formulated or reformulated as a QUBO or PUBO problem. Moreover, QUBO is known to be equivalent to a solution of the Ising model of spins, a well-known physical model to study spin-spin interactions.

Hence, according to an embodiment, the optimization functional is an Ising energy function. The Ising energy function may represent the energy of a plurality of interacting spins, optionally placed in an external force field, such as in an external magnetic field.

The techniques of the present invention hence allow for an efficient solution of the Ising model on a quantum computer, with limited qubit resources.

According to an embodiment, each binary transformed variable may correspond to a flip of the plurality of optimization variables in the respective subset. In other words, each binary transformed variable may correspond to flip of a specific subset of the optimization variables, corresponding in the Ising model to a specific subset of spins.

The variable conversion has been described above with reference to a first optimization variable among the plurality of binary optimization variables. However, in the context of the present disclosure several or all of the optimization variables of the optimization functional may be converted accordingly.

In particular, the method may comprise representing a second optimization variable among the plurality of binary optimization variables of the optimization functional as a second product of the binary transformed variables, wherein the second product comprises a second plurality of factors, wherein each factor among the second plurality of factors corresponds to a subset of the plurality of optimization variables and includes the second optimization variable.

Generally, the method may comprise representing each optimization variable among the plurality of binary optimization variables of the optimization functional as a respective product of the binary transformed variables, wherein the respective product comprises a respective plurality of factors, wherein each factor corresponds to a subset of the plurality of optimization variables that includes the respective optimization variable.

The total number of subsets may correspond to the total number of binary transformed variables.

The selection of the plurality of the subsets for the quantum computation may be made with a view towards making that quantum computation feasible on a quantum computational network, in particular on a variational quantum computational network with a limited number of qubit resources.

The plurality of the subsets may comprise all the subsets. However, in other embodiments the plurality of the subsets may comprise only a limited number smaller than the total number of the subsets.

According to an embodiment, selecting the plurality of the subsets pertaining to the first optimization variable may comprise selecting subsets that comprise optimization variables that are neighboring the first optimization variable, in particular neighboring the first optimization variable in a graph representation of the optimization functional.

In particular, selecting the plurality of the subsets pertaining to the first optimization variable may comprise only selecting subsets that comprise optimization variables that are neighboring the first optimization variable, in particular neighboring the first optimization variable in a graph representation of the optimization functional.

The plurality of the subsets may be chosen similarly for all the binary optimization variables.

Hence, according to an embodiment, selecting the plurality of the subsets pertaining to the respective optimization variable may comprise selecting subsets that comprise optimization variables that are neighboring the respective optimization variable, in particular neighboring the respective optimization variable in a graph representation of the optimization functional.

In particular, selecting the plurality of the subsets pertaining to the respective optimization variable comprises only selecting subsets that comprise optimization variables that are neighboring the respective optimization variable, in particular neighboring the respective optimization variable in a graph representation of the optimization functional.

According to an embodiment, the method further comprises representing each of the continuous variables in terms of a quantum probability, in particular by means of a conversion function.

In the context of the present disclosure, the quantum probability may correspond to a probability that an output state of the quantum computation yields a specific measurement result.

By representing the continuous variables in terms of a quantum probability, the cost function may be efficiently implemented on a quantum computational network. The quantum probabilities may establish the links between the measurement outcomes of the quantum computation and the cost function to be optimized.

According to an embodiment, the conversion function is a monotonic conversion function.

A monotonic conversion function makes the conversion from the quantum probabilities to the cost function particularly straightforward, and in particular guarantees that the conversion does not create additional unwanted local minima.

According to an embodiment, the conversion function is a differentiable function, in particular a smooth function.

According to an embodiment, the conversion function as a step-type function, in particular a differentiable or smooth step-type function.

In the context of the present disclosure, a step-type function may be a function that attains a first value, or is close to a first value, such as the value 1, for a continuous fraction of the parameter space. The step-type function may then drop to a second value, or close to a second value, such as the value -1, for another fraction of the parameter space. The drop may be a continuous drop.

A step-type conversion function may effectively serve as a filter of low quantum probabilities, and hence may make the quantum computation more efficient, and in particular may reduce the number of layers and measurements required for the quantum computation.

According to an embodiment, the method may further comprise optimizing the cost function, in particular by means of the quantum computation.

Optimizing the cost function may comprise minimizing or maximizing the cost function.

According to an embodiment, optimizing the cost function may comprise determining the gradient of the cost function.

Gradient-based methods are ubiquitous and useful tools in quantum implementations of binary optimization problems.

According to an embodiment, optimizing the cost function comprises optimizing the cost function on a quantum computational network.

According to an embodiment, the cost function may be optimized on a quantum computational network comprising a quantum register adapted to store a plurality of qubits, a plurality of quantum gates adapted to act on the plurality of qubits, in particular to act on the plurality of qubits in accordance with the selected subsets, and a measurement unit.

Optimizing the cost function on the quantum computational network may comprise: initializing the qubits; applying a plurality of the quantum gates to the qubits, in particular in accordance with the selected subsets, wherein the plurality of the quantum gates may comprise multi-qubit quantum gates acting on a plurality of the qubits; determining an output state of the quantum computational network; and performing a measurement and the output state at the measurement unit.

In particular, applying the plurality of the quantum gates may comprise sequentially applying a plurality of layers of the quantum gates to the qubits, wherein each layer comprises a multi-qubit quantum gate acting on a plurality of the qubits, in particular in accordance with the selected subsets.

The results of the measurement and the output state may be employed to determine the set of transformed and continuous variables that optimize the cost function.

According to an embodiment, the quantum computational network is a quantum-classical hybrid network, in particular a variational quantum computational network.

The structure of the cost function, comprising the transformed and continuous variables chosen in accordance with the selected subsets is particularly amenable to an efficient quantum computation with a limited number of qubits, in particular in a variational quantum computational network.

According to an embodiment, the qubits and/or the quantum gates of the quantum computational network may be selected in accordance with the selected plurality of subsets.

For instance, the qubits and/or the quantum gates may be selected so as to restrict interaction between the qubits to nearest-neighbor interactions, or to interactions within a limited predefined neighborhood of the qubits.

In an embodiment, the plurality of quantum gates comprise parametrized quantum gates, and the method comprises optimizing the cost function in terms of parameters of the parametrized quantum gates, in particular by iteratively applying a plurality of layers of the parametrized quantum gates to the qubits for different values of the parameters.

According to an embodiment, the parameters may be selected by means of an optimization, such as an optimization on a neural network.

According to an embodiment, the number of qubits scales logarithmically with the number of binary transformed variables, and/or scales logarithmically with the number of the selected subsets.

The logarithmic scaling permits to run the optimization on quantum computers with a limited number of qubit resources, while still allowing larger neighborhoods, and hence better computational accuracy, than conventional minimal encoding techniques.

According to an embodiment, the method comprises determining an optimal set of continuous variables from the measurement on the output state, and converting the optimal set of the continuous variables into an optimal set of the binary optimization variables.

The optimal set of continuous variables may be a set of variables that optimizes, e.g., minimizes or maximizes, the cost function of the quantum computation. This solution may be transferred into an optimal set of the binary optimization variables. The optimal set of the binary optimization variables may be a set of variables that optimizes, e.g., minimizes or maximizes, the optimization functional for the binary optimization problem.

The extremal values, i.e., the minimum values and/or the maximum values, of the cost function of the quantum computation may correspond to the extremal values, i.e., the minimum values and/or the maximum values, of the optimization functional for the binary optimization problem, and vice versa.

According to an embodiment, converting the optimal set of the continuous variables into the optimal set of the binary optimization variables comprises multiplying the continuous variables, in particular in accordance with the respective selected subsets.

Thus, by means of a re-conversion the solutions to the optimization of the cost function, as may be found by employing the quantum computational network, may be transferred back into solutions of the original binary optimization problem.

In particular, extreme points of the cost function (such as maxima and/or minima) may correspond to extreme points (such as maxima and/or minima) of the optimization functional, and vice versa.

According to a second aspect, the disclosure relates to a computer program and/or to a computer-program product and/or to a storage means, the computer program and/or the computer-program product and/or the storage means comprising computer-readable instructions, wherein the computer-readable instructions, when executed on a computer system, implement on the computer system a method with some or all of the features described above with reference to the first aspect.

According to a third aspect, the disclosure relates to a quantum computational network, comprising: a quantum register adapted to store a plurality of qubits; a plurality of quantum gates adapted to act on the qubits; a measurement unit adapted to measure an output state of the quantum computational network; and a control unit, wherein the control unit is coupled to the plurality of qubits, the plurality of quantum gates and the measurement unit, and is adapted to control the plurality of qubits and the plurality of quantum gates; wherein the control unit is adapted to implement a method with some or all of the features described above with reference to the first or second aspect.

In an embodiment, the quantum computational network is a quantum-classical hybrid network, in particular a variational quantum computational network.

According to an embodiment, the plurality of quantum gates may be grouped into a plurality of layers of quantum gates, wherein each layer comprises a multi-qubit quantum gate adapted to act on a plurality of the qubits.

Various techniques may be employed for implementing the quantum computational network. For instance, the qubits may be implemented as spin states of an electron in a magnetic field, energy levels of an atom, energy states of superconducting oscillators, or a polarization state of a photon. This variability and generality is a particular advantage of the techniques according to the present disclosure.

Brief Description of the Figures

The features and advantages of the techniques according to the present disclosure will become best apparent from the description of exemplary embodiments with reference to the accompanying drawings, in which:

Fig. 1    is a schematic illustration of a quantum computational network that may be employed in the context of the present disclosure;

Fig. 2    is a schematic illustration of a variational quantum computational network that may be employed in the context of the present disclosure;

Fig. 3    is a schematic illustration of a family of conversion functions that may be employed in the context of the present disclosure;

Fig. 4    is a flow diagram illustrating a method of converting an optimization functional for a binary optimization problem into a cost function for a quantum computation according to an embodiment;

Fig. 5    is a diagram illustrating the techniques for finding a solution to an optimization problem pertaining to an Ising ground state by means of a variational quantum circuit according to an embodiment;

Fig. 6    presents simulation results for the MaxCut optimization problem that were obtained by employing the techniques of the present disclosure; and

Fig. 7    presents simulation results for the graph coloring optimization problem that were obtained by employing the techniques of the present disclosure.

Detailed Description

The techniques of the present disclosure can be employed for the solution of binary optimization problems on a quantum computer. In the description of the exemplary embodiments below, we focus on the solution of Quadratic Unconstrained Binary Optimization (QUBO) problems. However, we will also show that the techniques can be generalized to higher-order problems, and in particular also apply to the solution of Polynomial Unconstrained Binary Optimization (PUBO) problems in the same manner.

For QUBO, assuming a given real upper-triangular matrix $A \in \mathbb{R}^{n \times n}$, for some positive integer n, the challenge is to find a binary vector $\vec{x}^* \in \{0,1\}^n$ that minimizes the optimization functional:

$$C(\vec{x}) = \vec{x}^T A \vec{x} = \sum_{i,j=1}^{n} a_{ij} x_i x_j = \sum_{i}^{n} a_{ii} x_i + \sum_{i<j}^{n} a_{ij} x_i x_j. \qquad (1)$$

By transformation $x_i \rightarrow (1 - Z_i)/2$, QUBO can be seen to be equivalent to the Ising model that describes the energy of a plurality of interacting spins, potentially in an external force field:

$$E(\vec{Z}) = \sum_i h_i Z_i + \sum_{i<j} J_{ij} Z_i Z_j, \qquad (2)$$

where $Z_i \in \{-1,1\}$ are the spin variables.

The following equations relate the coefficients of Eq. (1) and Eq. (2):

$$J_{ij} = a_{ij}/4, \quad h_i = -\sum_k (a_{ik} + a_{ki})/4. \qquad (3)$$

Local search is one of the most fundamental algorithms successfully applied to many hard combinatorial optimization problems. A local search algorithm starts from a candidate solution; it iteratively searches for a better solution among some defined set (typically, a neighborhood) and stops when all the neighbors are worse than the current solution. Many metaheuristics, such as simulated annealing, tabu search, and memetic algorithms, are based on local search. Increasing the size of the neighborhood potentially leads to better solutions, but comes at the expense of increased computational complexity and runtime.

In local search heuristics for QUBO, the neighbors are typically chosen from a set of solutions that differ by a few bits. When solutions at Hamming distance at most r (i.e., differing by no more than r bits) are used as neighbors, the algorithm is called r-flip or r-local search. The parameter r should usually be selected small, since the number of neighbors and the required computational resources grow quickly in r. For instance, in a problem with $n$ variables, the number of neighbors is equal to the binomial coefficient $C_n^r \sim O(n^r)$.

In the context of the present disclosure, we present a way to control a quantum processing unit to solve combinatorial optimization problems via a variational algorithm that implements a quantum version of local search with $l$ neighbors requiring only $\lceil \log_2 l \rceil$ qubits, where $\lceil x \rceil$ denotes the "ceiling" of x, i.e., the smallest integer no smaller than x.

*(a) Conversion*

In the context of this embodiment, we focus on the Ising representation of the QUBO problem, in accordance with Eq. (2). First, we choose an initial state of spins where all spins are in the state $Z_i = 1$. Then, we introduce a new set of $l$ binary transformed variables $\xi_k \in \{-1,1\}$, where each variable corresponds to a flip of a specific subset $G_k$ of spins. States of the original Ising variables are decoded back by the following product:

$$Z_i = \prod_{k:i \in G_k} \xi_k \qquad (4)$$

for each i = 1, ..., n. This definition guarantees that flipping $\xi_k$ results in flipping all spins $Z_i$ from the subset $G_k$.

Substituting Eq. (4) into (2), we obtain:

$$E(\vec{\xi}) = \sum_i h_i \prod_{k:i \in G_k} \xi_k + \sum_{i<j} J_{ij} \prod_{k:i \in G_k} \xi_k \prod_{k:j \in G_k} \xi_k. \qquad (5)$$

Since $\xi_k^2 = 1$, Eq. (5) can be rewritten as:

$$E(\vec{\xi}) = \sum_i h_i \prod_{k:i \in G_k} \xi_k + \sum_{i<j} J_{ij} \prod_{\substack{k:i \in G_k \\ j \notin G_k}} \xi_k \prod_{\substack{k:i \notin G_k \\ j \in G_k}} \xi_k \qquad (6)$$

We proceed by replacing the discrete variables $\xi_k \in \{-1,1\}$ with continuous variables $q_k \in [-1,1]$, resulting in the following cost function, which we may call an *auxiliary function:*

$$\tilde{E}(\vec{q}) = \sum_i h_i \prod_{k:i \in G_k} q_k + \sum_{i<j} J_{ij} \prod_{\substack{k:i \in G_k \\ j \notin G_k}} q_k \prod_{\substack{k:i \notin G_k \\ j \in G_k}} q_k, \qquad (7)$$

where $(1 - q_k)/2$ can be understood to denote the probability of $\xi_k = -1$.

*(b) Properties of the converted cost function*

The converted cost function E of Eq. (6) is a multilinear function. C. Laneve et al., "The interval analysis of multilinear expressions", Electronic Notes in Theoretical Computer Science, vol. 267, no. 2 (Oct. 2010), pp. 43-53 have shown that all local minima of a multilinear function occur at its vertices:

**Proposition 1** *Let* $f(\vec{p})$ *be a multilinear function. Then, on the hypercube* $[a, b]^n$, *all local* minima *are at its vertices - point in* $\{a, b\}^n$.

Proposition 1 characterizes the local minima of multilinear functions on a hypercube. In particular, Proposition 1 implies that the substitution of the discrete variables $\xi_k \in \{-1,1\}$ of Eq. (6) with the continuous variables $q_k \in [-1,1]$ of Eq. (7) do not affect the local minima, and hence Eq. (6) and Eq. (7) can be considered equivalent in terms of their optimization.

**Proposition 2** *Let* $\bar{a} := b, \bar{b} := a$ *(e.g., for* $x \in \{0,1\}$ $\bar{x}$ *is the logical negation).* $\vec{p} \in \{a, b\}^n$ *is a local minimum of f, if and only if* $f(p_1, ... , \bar{p_i}, ... , p_n) > f(p_1, ..., p_i, ... , p_n)$ *for all* $i \in \overline{1, n}$
*Proof.* Consider the vertex A = (a, ... , a), without loss of generality. A is a local minimum, if and only if the partial derivatives $\partial f/\partial p_i > 0$ for all *i*. Since a multilinear function is linear in each variable when the others are fixed:

$$\frac{\partial f}{\partial p_i}(A) = \frac{f(a..., p_i=b, ...a) - f(a..., p_i=a, ...a)}{b-a}. \qquad (8)$$

Given that $b > a$, we obtain the desired statement.
Applying Proposition 2 to the cost function Eq. (7), one obtains that local minima of this function are better than all neighbor solutions differing by spin-flips encoded in groups $\{G_k\}$. Hence, we built an analog of local search with a number of neighbors larger than in the minimal encoding.

Note that each product in Eq. (7) contains at most $l$ multipliers, and the whole expression contains $O(n^2)$ summands, i.e., the complexity of evaluating the cost function Eq. (7) does not exceed $O(n^2 l)$.

*(c) Extension to higher-order problems*

The techniques described above in Sections (a) and (b) can be applied to Polynomial Unconstrained Binary Optimization (PUBO) problems and, equivalently, generalized Ising models with higher-order spin interactions.

Let $n$ denote the number of variables, $7 = \{1,2, ..., n\}$. Then the Ising energy can be written as:

$$E = \sum_{S \subseteq V} J_S \prod_{i \in S} Z_i, \qquad (9)$$

with $J_S \in \mathbb{R}$ the model parameters. Eq. (9) generalizes Eq. (2) to higher-order spin interactions.

Substituting the same variable conversion of Eq. (4) into Eq. (9), we obtain:

$$E = \sum_{S \subseteq V} J_S \prod_{i \in S} \prod_{k:i \in G_k} \xi_k. \qquad (10)$$

Using again the identity $\xi_k^2 = 1$, one reduces the energy function Eq. (10) to a multilinear form and replaces the discrete variables with continuous ones according to the same scheme as for second-degree problem described above in Sections (a) and (b).

*(d) Neighborhood choice*

The set of coefficients $\{J_{ij}\}$ in Eq. (7) induces a graph with nodes $i \in 1:n$ and edges $\{(ij): J_{ij} \neq 0\}$ corresponding to the non-zero coefficients $J_{ij}$ in Eq. (2). This inherent graph structure of QUBO problems enables the use of the term *adjacent* relating to pairs of indices $(i, j)$.

For an optimization problem with all-to-all interactions, there is no general rule for choosing a set of neighbors for a given r-local search. Thus, in this scenario all solutions at Hamming distance at most r can be included in the neighbor set. However, in the following we demonstrate that for sparse problems, it makes sense to select only a problem-specific subset of the neighbors.

Let us assume that one uses minimal encoding and wants to encode some pairs to increase the neighborhood set and thus improve the accuracy of the solution. Consider the increment of the energy function Eq. (2) after inverting the k-th spin:

$$\Delta_k = -2Z_k (h_k + \sum_{i \neq k} (J_{ki} + J_{ik}) Z_i). \qquad (11)$$

It follows from Eq. (11) that $\Delta_k$ depends on $Z_k$ and on those spins $Z_i$ for which $J_{ki} + J_{ik} \neq 0$. Therefore, the increment of the energy after inverting two nonadjacent spins $(m, k)$ is $\Delta_{mk} = \Delta_m + \Delta_k$. For the local minimum of the minimal encoding, $\Delta_m > 0$ and $\Delta_k > 0$, and therefore $\Delta_{mk} > 0$. As a result, encoding nonadjacent pairs $\{(m, k)\}$ generally leaves the local minima of the minimal encoding unmodified. Hence, it makes sense to encode only adjacent pairs in order to eliminate the local minima.

The same idea may be generalized to larger subsets: If a group of spins G is a union of disjoint groups $G_1, G_2$, and $J_{km} + J_{mk} = 0$ for any $k \in G_1, m \in G_2$, then the increment in the energy after inverting all spins from $G$: $\Delta_G = \Delta G_1 + \Delta G_2$. If $G_1$ and $G_2$ are encoded, encoding G does not contribute to the elimination of the local minima.

*(e) Quantum circuit*

As illustrated in Sections (a) to (d) above, we can implement a local search for the original Ising problem by minimizing the derived auxiliary function given by Eq. (7). The form of Eq. (7) makes it perfectly suitable as a cost function for quantum computation. However, the number of variables (neighbors) $l$ can still be very large: it varies from $n$ for minimal encoding to $2^n$ for the extreme case where $G_k$ are all subsets of spins (all solutions are neighbors of each other). Thus, in practically relevant cases $l$ is limited by computational capabilities. By introducing a parameterized quantum circuit and encoding variables $q_k$ into it, one can obtain a quantum algorithm that can handle a classically intractable number of neighbors. Our algorithm utilizes a quantum circuit with $\lceil \log_2 l \rceil$ qubits.

The quantum algorithm generally becomes heuristic, and the above analysis of the local minima is no longer directly applicable, given that the parameters of the quantum circuit are optimized rather than $\vec{q}$ directly. Nevertheless, our numerical experiments for small-scale problems demonstrate that if the depth of the circuit is sufficient, the solutions are similar to those obtained by classical local search.

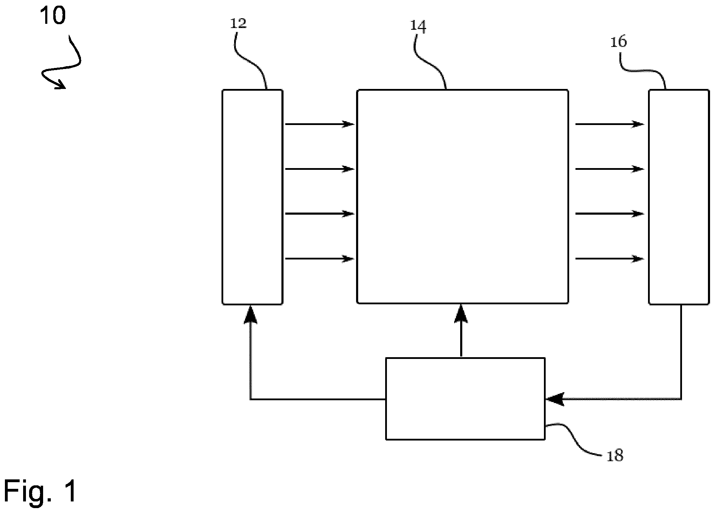

Fig. 1 schematically illustrates an example of a quantum computational network 10 that may be employed in the optimization of Eq. (7). The quantum computational network 10 comprises a qubit register 12 adapted to store a plurality of qubits. A plurality of quantum gates 14 may act on the qubits of the qubit register 12 to perform a quantum computation. The outcome of the quantum computation may be measured by a measurement unit 16, which may project the states of the qubits onto the computational basis states of the quantum computational network 10. The operation of the qubit register 12, quantum gates 14 and measurement unit 16 may be controlled by means of a control unit 18, which may comprise a (classical) processor and memory.

The control unit 18 may be configured to repeatedly perform a computation sequence on the qubits. The computation sequence may comprise initializing the qubits of the qubit register 12 before each computation, such as into the ground state of each qubit, e.g., to form an initial state of the qubits of |00...0>. The control unit 18 may then apply the plurality of quantum gates 14 to the qubits of the qubit register 12 to drive a coherent evolution of the qubits. Initially, the controller may produce superposition states of all qubits, e.g., by applying a Hadamard gate to each of the qubits, and may subsequently apply further quantum gates 14, depending on the intended calculation. Following the coherent evolution, the state of the qubits in the qubit register 12 may be measured by means of the measurement unit 16. The measurement results are supplied to the control unit 18. On the basis of the measured result, the control unit 18 can classically calculate an "energy"/"cost" of the solution with a cost function of the QUBO problem to be solved. The control unit 18 may then repeat the computation sequence based on the outcome, such as to progressively improve the solution to a QUBO type problem associated with the measured outcome.

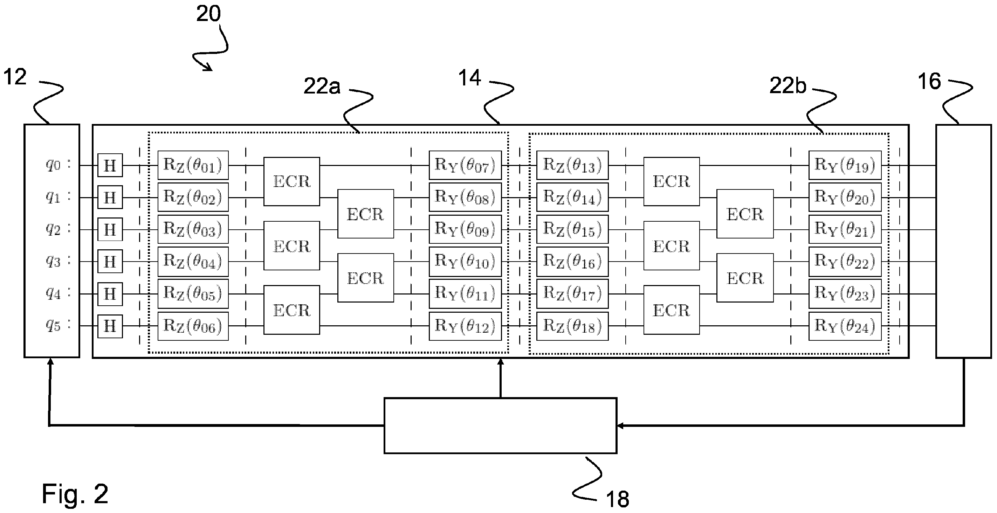

An implementation as a variational quantum computational network 20 is schematically illustrated in Fig. 2. The variational quantum computational network 20 is a specific implementation of the quantum computational network 10 described above with reference to Fig. 1, and corresponding components are denoted with the same reference numerals.

In the variational quantum computational network 20, the quantum gates 14 comprise variational quantum gates with variable actions that adjust physical parameters of the quantum gates, depending on the input from the control unit 18. These physical parameters may be optimized by the control unit 18 in a classical optimization, for instance by means of neural network techniques. The control unit 18 may analyze the outcome of the measurement unit 16, and may then repeat the computation sequence with adjusted variable actions based on the outcome, such as to progressively improve the solution to a QUBO type problem associated with the measured outcome. Specifically, the control unit 18 may repeat the computation sequence with adjusted operation parameters for the variational quantum gates in order to determine a gradient of the plurality of quantum gates 14 from the measured outcomes, and may update the variable actions based on the estimated gradient in order to progressively adjust the quantum computational network 20 towards an improved solution.

The variational quantum computational network 20 comprises a qubit register 12 including an integer number $N_q$ of qubits denoted by $q_0$, $q_1$, ..., $q_5$. Fig. 2 shows an implementation with $N_q = 6$ computing qubits, but this is a mere example, and other quantum computational networks may comprise a smaller or larger number of computing qubits. Additionally, the quantum computational network 20 may comprise so-called ancilla qubits (not shown in Fig. 2), which may assist in the state preparation, to implement the quantum gates 14 or to perform the quantum measurements in the measurement unit 16. In Fig. 2, the evolution of each qubit state is illustrated as a horizontal line extending from the qubit register 12 towards the measurement unit 16.

The qubits may be initialized into their ground states, e.g. |0>. As illustrated in Fig. 2, the plurality of quantum gates 14 may comprise a plurality of Hadamard gates (H) acting on each qubit of the qubit register 12 after the qubits have been initialized, to prepare each qubit in a superposition state.

As further illustrated in Fig. 2, the plurality of quantum gates 14 may be arranged into layers 22a, 22b of similar or identical structure, and the control unit 18 may subsequently apply the layers 22a, 22b of quantum gates with their respective variational parameters. Each layer 22a, 22b may comprise multi-qubit gates for entangling a plurality or all of the states of the qubits, and variational quantum gates affecting the state of all qubits. Fig. 2 shows an implementation with two layers 22a, 22b of quantum gates with equal structure, wherein the layers 22a, 22b represent a plurality of quantum operations on the qubits in the qubit register 12, which are subsequently applied. However, in general any number L of layers may be employed in the variational quantum computational network 20, depending on the specific application.

In each layer 22a, 22b, variational single qubit gates drive single qubit rotations $R_Z(\theta)$ of each qubit around axis $Z$ as well as single qubit rotations $R_Y(\theta)$ of each qubit around axis $Y$, with respective variable angles $\theta_i$. The variational angles $\theta_1$-$\theta_N$ across all layers 22a, 22b form a set of variational parameters $\vec{\theta}$ of the quantum computational network 20, which can be adjusted and optimized by means of the control unit 18. The obtained quantum circuit hence has $2N_qL$ trainable parameters $\vec{\theta}$.

In Fig. 2, each layer 24a, 24b additionally comprises a plurality of two-qubit gates acting on all pairs of neighboring qubits of the qubit register 12. In the example of Fig. 2, the two-qubit gates comprise entangling ECR ("Echoed Cross Resonance") gates. The ECR gate is a native gate on many IBM quantum devices, which can be expressed in the following matrix representation:

$$ECR = \frac{1}{\sqrt{2}} \begin{pmatrix} 0 & 1 & 0 & i \\ 1 & 0 & -i & 0 \\ 0 & i & 0 & 1 \\ -i & 0 & 1 & 0 \end{pmatrix} \tag{12}$$

Following the application of the layers 22a, 22b of quantum gates onto the qubits, the state of the qubits may be measured by means of the measurement unit 16. The measurement unit 16 may comprise a plurality of single qubit state detectors for measuring the state of each qubit following the evolution according to the plurality of quantum gates 14. Repeating the state evolution and the measurement may allow determining the probability of each measurement outcome.

The control unit 18 may additionally repeat the computation sequence with adjusted operation parameters $\vec{\theta}$ for the variational quantum gates in order to determine a gradient of the plurality of quantum gates 14 from the measured outcomes, and may update the variable actions based on the estimated gradient in order to progressively adjust the quantum computational network 20 towards an improved solution of Eq. (7).

The skilled person will appreciate that the types and arrangement of gates in Fig. 2 is for illustrative purposes only, and architectures of the quantum computational network 20 may differ from the depicted representation. For example, quantum CNOT (controlled NOT) gates may be employed as entangling gates instead of ECR gates.

*(f) Encoding variables into quantum amplitudes*

In order to employ the quantum circuits of Fig. 1 and 2 for the optimization of the QUBO problem, the measurement outcomes obtained by the measurement unit 16 and processed by the control unit 18 need to be linked to the optimization parameters of the cost function Eq. (7). To do so, we may use a conversion function that represents each of the variables $q_k$ of the cost function Eq. (7) in terms of a quantum probability.

Let $\vec{\psi}$ be the state vector. Here we introduce an encoding $q_k \in [-1,1]$ into quantum probabilities $P_k := |\psi_k|^2$, where the indices $k$ correspond to a set of measurement results, such as in a computational basis, with the intrinsic normalization $\Sigma P_k = 1$. As an example, we choose the following nonlinear conversion function:

$$q_k = 2\frac{\tanh(\alpha(1-MP_k))+1}{\tanh\alpha+1} - 1. \tag{13}$$

Here, $\alpha$ and $M$ are additional hyperparameters.

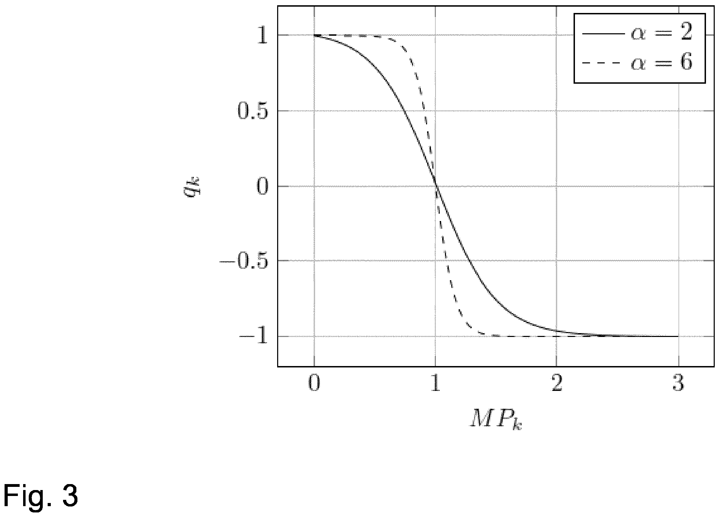

Examples of the conversion function Eq. are shown in Fig. 3 as a function of $MP_k$ for two different values $\alpha = 2$ (solid lines) and $\alpha = 6$ (dashed lines). The hyperparameter $\alpha$ affects the smoothness of the step-type conversion function Eq. (13). We found that tuning $\alpha$ enhances trainability. The conversion function of Eq. (13) is monotonic and, thus, does not create additional local minima.

On a real quantum device, there is usually no direct access to the quantum probabilities $P_k$. One can usually only get an estimation from $N$ measurements (shots) in a computational basis: $P_k = N_k/N$, where the $k$-th outcome occured $N_k$ times. Since we want the algorithm to work with classically intractable $I$, the number of shots $N \ll I$ should be sufficient to obtain a good estimation of the cost function. The cost function Eq. (7) is not affected by $q_k = 1$. As can be seen from Fig. 3, $q_k \approx 1$ when $P_k \ll 1/M$. Therefore, only $P_k \gtrsim 11M$ contribute to the cost function Eq. (7), and $N = 0(M)$ shots should be sufficient to estimate it. In this way, the step-type conversion function Eq. (13) may serve as a filter of the low quantum probabilities.

The limitation of $M$ may involve the following challenge: Since $\Sigma P_k = 1$ and only $P_k \gtrsim 1/M$ contribute to the cost function, not more than $\approx M$ variables can be smaller than 0. In the context of a local search, this means that we effectively limited the number of steps to $\approx M$, because $q_k < 0$ results in inversion of the corresponding group $G_k$ in the most probable solution. However, this problem can be overcome by way of interation, i.e., by starting a new round of optimization from a solution found in a previous round.

After $N$ shots, there are not more than $N$ nonzero $P_k$. Since $q_k(P_k = 0) = 1$ do not contribute to the cost function Eq. (7), this function can be efficiently calculated in no more than $O(n^2N)$ time steps (in comparison to $O(n^2I)$ in the general case).

*(a) Optimization process*

After substituting the conversion function Eq. (13) into the cost function Eq. (7) and introducing a parameterized quantum circuit as shown in Fig. 2, we obtain a composite auxiliary function $\tilde{E} = \tilde{E}[\vec{q}(\vec{P}(\vec{\theta}))]$. In order to estimate the cost function, the quantum circuit of Fig. 2 is prepared and sampled $N$ times in a computational basis, resulting in the empirical probability distribution $\{N_k/N\}$ for estimating $\vec{P}$, where $N_k$ is the number of shots providing the /c-th outcome.

To optimize the cost function Eq. (7), we may use gradient-based methods and optimize the variational parameters $\vec{\theta}$. To that end, we also need to compute the gradient of the cost function Eq. (7) with respect to the variational parameters $\vec{\theta}$. We are specifically interested in

$$\frac{\partial \tilde{E}}{\partial \vec{\theta}} = \frac{\partial \tilde{E}}{\partial \vec{q}} \frac{\partial \vec{q}}{\partial \vec{P}} \frac{\partial \vec{P}}{\partial \vec{\theta}}. \qquad (14)$$

The partial derivatives $\partial \tilde{E}/\partial \vec{q}$ and $\partial \vec{q}/\partial \vec{P}$ may be calculated by direct differentiation of the formulas Eq. (7) and (13). The third partial derivative $\partial \vec{P}/\partial \vec{\theta}$ can be calculated using the so-called *parameter-shift rule:*

$$\frac{\partial \vec{P}}{\partial \theta_j} = \frac{1}{2}\left(\vec{P}(\theta_j + \pi/2) - \vec{P}(\theta_j - \pi/2)\right), \qquad (15)$$

cf. M. Schuld et al., "Evaluating analytic gradients on quantum hardware", Phys. Rev. A 99 (2019) 032331.

The optimization process may be started with a random initialization of the parameters $\vec{\theta} = \vec{\theta}_0$. The parameters are then updated until convergence. After that, the circuit is measured again to obtain an estimate of $(1 - \vec{q}(\vec{P}))/2$, i.e., the probabilities of $\xi_k = -1$. These probabilities may be used to sample the most probable $\vec{\xi}$ and to obtain corresponding solutions $\vec{Z}$ using the conversion of Eq. (4), from which the best one $\vec{Z}^{best}$ may be selected, i.e., the one with the minimal energy $E(\vec{Z})$ according to Eq. (2).

As explained above in Section (f), one optimization round may provide no more than $\approx M$ steps of local search, starting from $\vec{Z}^{(0)} = 1$. To continue the local search, we may make a transformation $Z_i \to -Z_i$ if $Z_i^{best} = -1$, which maps $\vec{Z}^{best} \to \vec{Z}^{(0)}$. The Ising coefficients are transformed as: $h_i \to Z_i^{best} h_i$ and $J_{ij} \to Z_i^{best} Z_j^{best} J_{ij}$. These transformations result in a new optimization problem, for which $\vec{Z}^{best}$ becomes an initial solution. By repeating the above-described process for the transformed problem, one obtains a continuation of the local search by way of iteration.

### (h) *Flow diagrams*

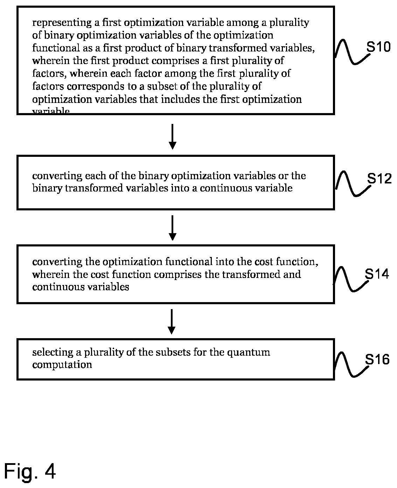

Fig. 4 is a flow diagram that schematically illustrates a method of converting an optimization functional for a binary optimization problem into a cost function for a quantum computation according to an embodiment, for instance a conversion as described above in Sections (a) to (i).

In a first step S10, a first optimization variable among a plurality of binary optimization variables is represented as a first product of binary transformed variables, wherein the first product comprises a first plurality of factors, wherein each factor among the first plurality of factors corresponds to a subset of the plurality of optimization variables that includes the first optimization variable.

In a second step S12, each of the binary optimization variables or of the binary transformed variables are converted into a continuous variable.

In a third step S14, the optimization functional is converted into the cost function for the quantum computation, wherein the cost function comprises the transformed and continuous variables.

In a fourth step S16, a plurality of the subsets is selected for the quantum computation.

The flow diagram of Fig. 4 necessarily shows the method steps in a certain order. However, it will be understood by the person skilled in the art that the present disclosure is not limited to a specific time order, and that the steps of the method according to the present disclosure may be implemented in any feasible order. For instance, the step of selecting the plurality of the subsets for the quantum computation may take place at any time during the method, in particular before or after the variable conversion. Moreover, the person skilled in the art will understand that two or more of the steps S10 to S16 may not be implemented in time sequence, but may be combined into a single step.

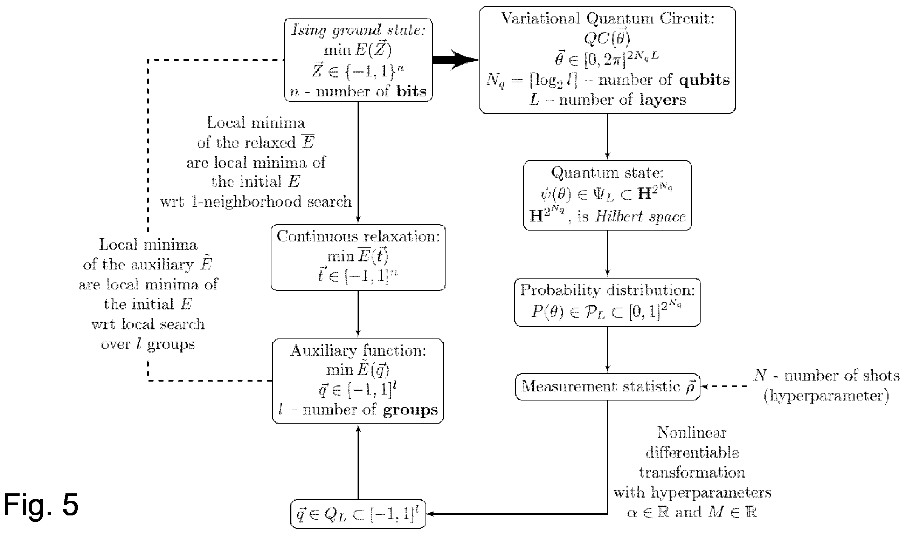

Fig. 5 is a conceptual diagram that illustrates the conversion techniques according to the present disclosure according to an embodiment, in which the initial discrete Ising ground state problem is converted to the problem of continuous parameter optimization of a variational quantum computational network. The cost function of the quantum computation that results from the conversion of the Ising energy functional serves as an auxiliary function for the original Ising ground state problem. The quantum computation, such as by means of the variational quantum computational network 20, permits to find the approximate local minima of the auxiliary function, with limited qubit resources. These local minima are precisely the local minima of the Ising Hamiltonian over some custom neighbourhood with $l$ neighbors.

As the variational quantum computational network 20 can be implemented with $N_q = \lceil log_2 l \rceil$ qubits, and as number of optimization parameters $2N_q L$ of the variational quantum computational network 20 is generally smaller than $l$ (at least for large 1), the search space for the parameter optimization is of smaller dimension than $[0,1]^l$. Groups, the number of layers $L$, the number of shots $N$ and values $\alpha$ and $M$ are hyperparameters of the implementation, and may be selected heuristically.

### (i) Example implementation: MaxCut Problem

One of the canonical and well-studied combinatorial optimization problems is the so-called MaxCut problem, which is a search for the partition of the nodes of a graph into two complementary sets, such that the total weight of edges between these two sets is as large as possible. MaxCut is equivalent to the Ising model with $h_i = 0$ and $J_{ij} = w_{ij}$, where $w_{ij}$ is the weight of the edge between the $i$th and jth nodes in the graph.

We chose a 3-regular graph with 250 nodes for our experiment. The weights were randomly sampled from a uniform distribution on the interval [-0.5,0.5]. We tested our algorithm with different numbers of neighbors encoded. Since the problem is sparse, we took all connected groups $G$, such that $|G| \leq r$ for four different values $r = 1, 2, 3, 5$. The algorithm was launched from 100 random initial solutions $\vec{x}_0$. L-BFGS-B was used as an optimizer, cf. R. H. Byrd et al., "A limited memory algorithm for bound constrained optimization", SIAM J. Sci. Comput. 16 (1995) pp. 1190-1208. After optimization, the found solution was taken as a new initial point, and the algorithm was relaunched. Several such rounds have been performed. For comparison, a classical local search was run with the same neighbors from the same initial solutions.

The experimental parameters are shown in the following Table for the four different values $r = 1, 2, 3, 5$. As can be taken from the Table, the number of qubits number $N_q$ scales logarithmically as a function of the number of groups, l.

| r | 1 | 2 | 3 | 5 |
|---|---|---|---|---|
| # Groups,l1 | 250 | 625 | 1373 | 7516 |
| # Qubits, $N_q$ | 8 | 10 | 11 | 13 |
| # Layers, L | 10 | 12 | 16 | 25 |
| # Circuit parameters | 160 | 240 | 352 | 650 |
| # Rounds | 1 | 4 | 3 | 5 |
| *M* | 500 | 200 | 400 | 1000 |
| $\alpha$ | 3 | 3 | 3 | 4 |

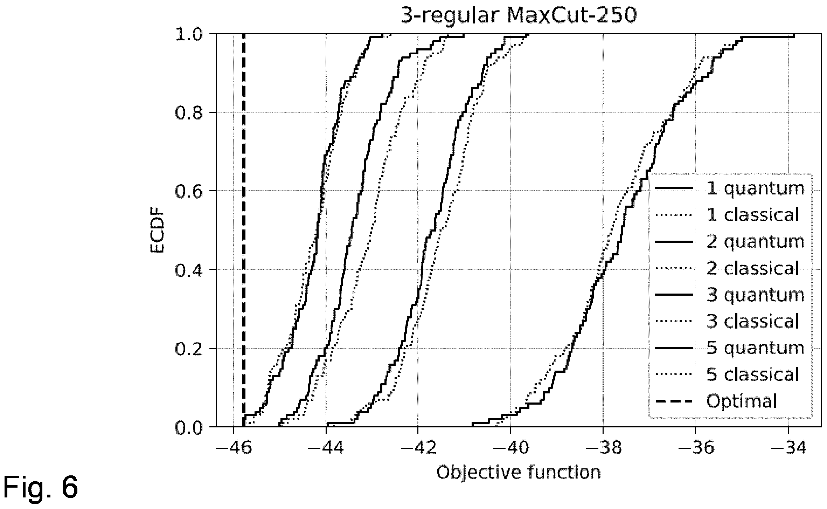

The ensemble of the final solutions from 100 independent runs was used to calculate the empirical cumulative distribution function (ECDF) of the objective function. The results are presented in Fig. 6, which shows the pairs of the quantum and classical solution for each of the four different values r = 1, 2, 3, 5 (from right to left, quantum solution in solid lines and classical solution in dotted lines).

As can be taken from Fig. 6, the more neighbors are encoded, the better solutions are obtained. Encoding with r = 5 was able to find the optimal solution. The experiment confirms that the quantum algorithm can find solutions similar to the classical local search over the corresponding neighborhood. Moreover, we highlight that our quantum algorithm provides an advantage over classical optimization of the cost function in Eq. (7) in terms of the number of variational parameters. As can be seen in the above Table comparing the number of groups and circuit parameters, this advantage becomes more pronounced with the growth of *r*.

### (j) Example implementation: Graph Coloring Problem

To demonstrate a more sophisticated choice of the neighbors, we consider a problem with constraints, namely the graph coloring problem. Graph coloring is a way of labeling the vertices of a graph with colors such that no two adjacent vertices are assigned the same color. The QUBO formulation of a graph coloring problem can be written as follows:

$$C(\vec{x}) := \lambda \sum_{v=1}^{n} \left(1 - \sum_{i=1}^{k} x_{v,i}\right)^2 + \sum_{v,w=1}^{n} \sum_{i=1}^{k} S_{vw} x_{v,i} x_{w,i} \rightarrow \min_{x_{v,i} \in \{0,1\}}, \qquad (16)$$

cf. Z. Tabi et al., "Quantum optimization for the graph coloring problem with space-efficient embedding", arXiv:2009.07314 v1, 15. Sept. 2020.

In Eq. (16), $S$ denotes the graph adjacency matrix. The bits $x_{v,i}$ in this formulation have double indices $(v, i)$, where $v \in \{1, ..., n\}$ labels the vertices and $i \in \{1, ..., k\}$ the colors. Therefore, the feasible solutions (each vertex is colored in one color) are restricted to those where for each index $v$ exactly one bit $x_{v,i} = 1$. The first term in Eq. (16) with prefactor $\lambda > 0$ aims to penalize the unfeasible solutions. Then, the desired coloring is obtained at $C = 0$.

The prior art techniques of minimal encoding do not work well on this problem, because any feasible solution becomes infeasible if one bit is inverted. Therefore, any feasible solution is a local minimum due to the penalty term in Eq. (16).

In order for a neighborhood of one feasible solution to contain another feasible solution, we chose variables each of which flips a pair of bits $(x_{v,i}, x_{v,j})$ for all $v$ and $i \neq j$. This set contains all groups that recolor any vertex in a different color. Note that this choice is more efficient than taking all connected pairs, since the latter contains pairs $(x_{v,i}, x_{w,i})$ which do not preserve feasibility.

We chose the instance *myciel7* from Z. Tabi *et al.* for the experiment, and the following parameters: number of vertices $n = 191$, edges 2360, colors $k = 8$. The experiment was conducted using the same scheme as for the MaxCut problem described above in Section (i). For the quantum computation, 100 random feasible solutions were chosen as the initial solutions, with the experiment parameters as follows: 5348 groups, 13 qubits, 20 layers, $M = 1000$, $\alpha = 4$.

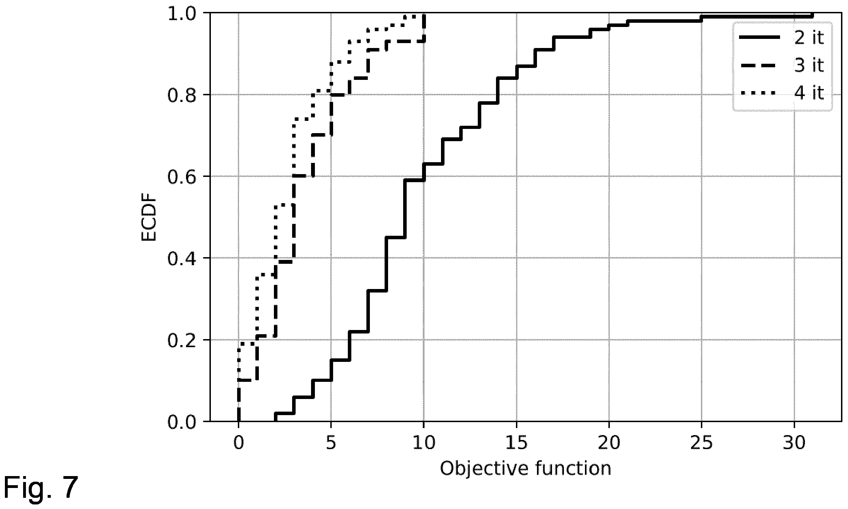

Fig. 7 is similar to Fig. 6 and shows the empirical cumulative distribution function (ECDF) of the objective function of solutions for two, three, and four iterations (from right to left). After four optimization rounds, where the final solution from a previous round is taken as an initial solution in the next round, our algorithm found the correct coloring with a probability of 20%. Note that algorithms based on *one-hot* encoding, including QAOA, require 1528 qubits for this problem, which is far beyond the capabilities of current quantum computation devices.

The description of the specific embodiments and the Figures merely serve to illustrate the techniques of the present disclosure and the advantages associated therewith, but should not be understood to imply any limitation. The scope of the invention is to be determined from the appended claims.

Reference Signs

      10 quantum computational network
      12 qubit register
      14 quantum gates
      16 measurement unit
      18 control unit
      20 variational quantum computational network
      22a, 22b first, second layers of quantum gates

**Claims**

1.  A method of converting an optimization functional for a binary optimization problem into a cost function for a quantum computation, the method comprising:

      representing (S10) a first optimization variable among a plurality of binary optimization variables of the optimization functional as a first product of binary transformed variables,
      wherein the first product comprises a first plurality of factors, wherein each factor among the first plurality of factors corresponds to a subset of the plurality of optimization variables that includes the first optimization variable;
      converting (S12) each of the binary optimization variables or the binary transformed variables into a continuous variable;
      converting (S14) the optimization functional into the cost function, wherein the cost function comprises the transformed and continuous variables; and
      selecting (S16) a plurality of the subsets for the quantum computation.

2.  The method according to claim 1, wherein each binary transformed variable corresponds to a flip of the plurality of optimization variables in the respective subset.

3.  The method according to claim 1 or 2, wherein selecting (S16) the plurality of the subsets pertaining to the first optimization variable comprises selecting subsets that comprise optimization variables that are neighboring the first optimization variable, in particular neighboring the first optimization variable in a graph representation of the optimization functional.

4. The method according to any one of the preceding claims, further comprising:
representing each of the continuous variables in terms of a quantum probability, in particular by means of a conversion function.

5. The method according to any one of the preceding claims, further comprising:
optimizing the cost function, in particular by means of the quantum computation.

6. The method according to claim 5, wherein optimizing the cost function comprises determining a gradient of the cost function.

7. The method according to claim 5 or 6, wherein optimizing the cost function comprises optimizing the cost function on a quantum computational network (10, 20), in particular on a quantum computational network (10, 20) comprising a quantum register (12) adapted to store a plurality of qubits, a plurality of quantum gates (14) adapted to act on the plurality of qubits, and a measurement unit (16).

8. The method according to claim 7, wherein optimizing the cost function on the quantum computational network (10, 20) comprises:

   initializing the qubits in the quantum register (12);
   applying the quantum gates (14) to the qubits, wherein the quantum gates (14) comprise multi-qubit quantum gates acting on a plurality of the qubits, in particular in accordance with the selected subsets;
   determining an output state of the quantum computational network (10, 20); and
   performing a measurement on the output state at the measurement unit (16).

9. The method according to claim 7 or 8, wherein the quantum computational network (10, 20) is a quantum-classical hybrid network, in particular a variational quantum computational network (20).

10. The method according to any one of the claims 7 to 9, wherein the plurality of quantum gates comprise parametrized quantum gates (14), and wherein the method further comprises optimizing the cost function in terms of parameters of the parametrized quantum gates (14), in particular by iteratively applying a plurality of layers (22a, 22b) of the parametrized quantum gates to the qubits for different values of the parameters.

11. The method according to any one of the claims 7 to 10, wherein the number of qubits scales logarithmically with the number of binary transformed variables, and/or scales logarithmically with the number of the selected subsets.

12. The method according to claim 8, optionally in combination with any one of the claims 9 to 11, further comprising:

   determining an optimal set of continuous variables from the measurement on the output state; and
   converting the optimal set of the continuous variables into an optimal set of the binary optimization variables.

13. The method according to claim 12, wherein converting the optimal set of the continuous variables into the optimal set of the binary optimization variables comprises multiplying the continuous variables, in particular in accordance with the respective selected subsets.

14. A computer program comprising computer-readable instructions, wherein the computer-readable instructions, when executed on a computer system, implement on the computer system a method according to any one of the preceding claims.

15. A quantum computational network (10, 20), comprising:

   a quantum register (12) adapted to store a plurality of qubits;
   a plurality of quantum gates (14) adapted to act on the qubits;
   a measurement unit (16) adapted to measure an output state of the quantum computational network (10, 20); and
   a control unit (18), wherein the control unit (18) is coupled to the plurality of qubits, the plurality of quantum gates (14) and the measurement unit (16), and is adapted to control the plurality of qubits and the plurality of quantum gates (14);
wherein the control unit (18) is adapted to implement a method according to any one of the claims 1 to 13.

Fig. 1

Fig. 2

Fig. 3

representing a first optimization variable among a plurality of binary optimization variables of the optimization functional as a first product of binary transformed variables, wherein the first product comprises a first plurality of factors, wherein each factor among the first plurality of factors corresponds to a subset of the plurality of optimization variables that includes the first optimization variable

S10

converting each of the binary optimization variables or the binary transformed variables into a continuous variable

S12

converting the optimization functional into the cost function, wherein the cost function comprises the transformed and continuous variables

S14

selecting a plurality of the subsets for the quantum computation

S16

Fig. 4

**Ising ground state:**
$\min E(\vec{Z})$
$\vec{Z} \in \{-1,1\}^n$
$n$ – number of **bits**

**Variational Quantum Circuit:**
$QC(\vec{\theta})$
$\vec{\theta} \in [0, 2\pi]^{2N_q L}$
$N_q = \lceil \log_2 l \rceil$ – number of **qubits**
$L$ – number of **layers**

**Quantum state:**
$\psi(\theta) \in \Psi_L \subset \mathbf{H}^{2^{N_q}}$
$\mathbf{H}^{2^{N_q}}$, is *Hilbert space*

**Probability distribution:**
$P(\theta) \in \mathcal{P}_L \subset [0,1]^{2^{N_q}}$

**Measurement statistic** $\vec{\rho}$

$N$ - number of shots
(hyperparameter)

Nonlinear differentiable transformation with hyperparameters $\alpha \in \mathbb{R}$ and $M \in \mathbb{R}$

$\vec{q} \in Q_L \subset [-1,1]^l$

**Auxiliary function:**
$\min \tilde{E}(\vec{q})$
$\vec{q} \in [-1,1]^l$
$l$ – number of **groups**

**Continuous relaxation:**
$\min \overline{E}(\vec{t})$
$\vec{t} \in [-1,1]^n$

Local minima of the relaxed $\overline{E}$ are local minima of the initial $E$ wrt 1-neighborhood search

Local minima of the auxiliary $\tilde{E}$ are local minima of the initial $E$ wrt local search over $l$ groups

## Fig. 5

3-regular MaxCut-250

Fig. 6

Fig. 7

# EUROPEAN SEARCH REPORT

**Application Number**

EP 25 15 5189

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/101167 A1 (PAKHOMCHIK ALEXEY [CH] ET AL) 31 March 2022 (2022-03-31) <br> * paragraph [0014] * <br> * paragraph [0030] - paragraph [0033] * <br> ----- | 1-15 | INV. <br> G06N10/60 <br> G06N10/80 <br> G06N5/01 |
| A | YUHAN HUANG ET AL: "Quantum-Inspired Mean Field Probabilistic Model for Combinatorial Optimization Problems", ARXIV.ORG, CORNELL UNIVERSITY LIBRARY, 201 OLIN LIBRARY CORNELL UNIVERSITY ITHACA, NY 14853, <br> 1 June 2024 (2024-06-01), XP091778636, <br> * paragraphs [000I], [0III]; figure 1 * <br> ----- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 23 June 2025 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 787 248 A1**

## ANNEX TO THE EUROPEAN SEARCH REPORT
## ON EUROPEAN PATENT APPLICATION NO.

EP 25 15 5189

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2025

| Patent document cited in search report | Publication date | Patent family member(s) | Publication date |
|---|---|---|---|
| US 2022101167 A1 | 31-03-2022 | AU 2021229219 A1 | 14-04-2022 |
| | | CA 3131476 A1 | 29-03-2022 |
| | | CN 114358290 A | 15-04-2022 |
| | | EP 3975073 A1 | 30-03-2022 |
| | | JP 7340282 B2 | 07-09-2023 |
| | | JP 2022058331 A | 12-04-2022 |
| | | KR 20220043890 A | 05-04-2022 |
| | | US 2022101167 A1 | 31-03-2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220101167 A1

**Non-patent literature cited in the description**

- **M. SCIORILLI et al.** Towards large-scale quantum optimization solvers with few qubits. *arXiv:2401.09421 v2*, 25 March 2024
- **B. TAN et al.** Qubit-efficient encoding schemes for binary optimisation problems. *Quantum*, 2021, vol. 5, 454
- **M. R. PERELSHTEIN et al.** NISQ-compatible approximate quantum algorithm for unconstrained and constrained discrete optimization. *Quantum*, 2023, vol. 7, 1186
- **C. LANEVE et al.** The interval analysis of multilinear expressions. *Electronic Notes in Theoretical Computer Science*, October 2010, vol. 267 (2), 43-53
- **M. SCHULD et al.** Evaluating analytic gradients on quantum hardware. *Phys. Rev. A*, 2019, vol. 99, 032331
- **R. H. BYRD et al.** A limited memory algorithm for bound constrained optimization. *SIAM J. Sci. Comput.*, 1995, vol. 16, 1190-1208
- **Z. TABI et al.** Quantum optimization for the graph coloring problem with space-efficient embedding. *arXiv:2009.07314 v1*, 15 September 2020